(19) Europäisches Patentamt
European Patent Office
Office européen des brevets

(11) **EP 3 009 934 B1**

(12) **FASCICULE DE BREVET EUROPEEN**

(45) Date de publication et mention
de la délivrance du brevet:
**18.03.2020 Bulletin 2020/12**

(51) Int Cl.:
**G06F 11/34** (2006.01)     **G06Q 10/00** (2012.01)
**G06F 1/324** (2019.01)     G06F 11/30 (2006.01)

(21) Numéro de dépôt: **15187546.5**

(22) Date de dépôt: **30.09.2015**

(54) **PROCEDE DE DETERMINATION D'UNE FREQUENCE DE MICROPROCESSEUR OPTIMALE POUR L'EXECUTION D'UNE APPLICATION LOGICIELLE**

VERFAHREN ZUR BESTIMMUNG EINER OPTIMALEN PROZESSOR-FREQUENZ FÜR DIE AUSFÜHRUNG EINER SOFTWARE

METHOD FOR DETERMINING AN OPTIMAL CPU FREQUENCY FOR EXECUTING A SOFTWARE APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2014 FR 1459967**

(43) Date de publication de la demande:
**20.04.2016 Bulletin 2016/16**

(73) Titulaire: **BULL**
**78340 Les Clayes Sous Bois (FR)**

(72) Inventeurs:
• **MAUPU, Yann**
**31400 Toulouse (FR)**
• **CADEAU, Thomas**
**91300 Massy (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A1- 2007 168 055     US-A1- 2012 260 057**

• **FREEH V W ET AL: "Exploring the Energy-Time Tradeoff in MPI Programs on a Power-Scalable Cluster", PARALLEL AND DISTRIBUTED PROCESSING SYMPOSIUM, 2005. PROCEEDINGS. 19TH IEEE INTERNATIONAL DENVER, CO, USA 04-08 APRIL 2005, PISCATAWAY, NJ, USA,IEEE, 4 avril 2005 (2005-04-04), pages 4a-4a, XP010785486, DOI: 10.1109/IPDPS.2005.214 ISBN: 978-0-7695-2312-5**
• **"Multi Objective Optimization of HPC Kernels for Performance, Power, and Energy" In: Prasanna Balaprakash et al.: "ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE]", 1 septembre 2014 (2014-09-01), SPRINGER VERLAG, XP047300694, ISSN: 0302-9743 DOI: 10.1007/978-3-319-10214-6, * avant dernier paragraphe : "1. HPC administrators..."; page 240 ***

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

L'invention est relative à l'exécution d'une application logicielle sur un système de traitement de l'information. Elle concerne plus particulièrement la détermination de la fréquence optimale d'exécution de l'application logicielle par exemple sur une ferme de calcul.

CONTEXTE DE L'INVENTION

Certains dispositifs de traitement de l'information permettent le choix, lors du lancement d'une application logicielle, de la fréquence du ou des microprocesseurs (ou CPU pour « Central Processing Unit ») à laquelle elle doit être exécuté.

De ce choix dépend le temps d'exécution de l'application : plus la fréquence est élevée et plus le temps d'exécution sera court.

Mais le choix de la fréquence d'exécution influe également sur la consommation énergétique. En effet, plus la fréquence est élevée et plus la consommation énergétique instantanée (c'est-à-dire par quantum de temps) est élevée.

De façon générale, l'utilisateur d'une application logicielle souhaite minimiser à la fois le temps d'exécution et la consommation énergétique.

Dans le cas de fermes de calcul, ou grappes d'ordinateurs, notamment sur le « *cloud* », les utilisateurs sont facturés en fonction de l'accès aux services de calcul. La facturation se base typiquement sur le temps d'utilisation mais aussi, de plus en plus, sur la consommation énergétique, c'est-à-dire sur la consommation électrique utilisée par la ferme de calcul pour exécuter l'application logicielle du client.

Pour cette raison aussi, il est important pour l'utilisateur de pouvoir minimiser ces deux critères : temps d'exécution et consommation énergétique. Toutefois, ceux-ci ont des rapports de proportionnalités opposés par rapport à la fréquence d'exécution. Augmenter la fréquence permet de diminuer le temps d'exécution de l'application, mais en même temps augmente la consommation énergétique : la détermination d'une fréquence optimale, permettant de concilier les deux critères, pose donc un problème.

Une solution connue consiste à exécuter des applications de test à différentes fréquences et de mesurer le temps d'exécution et la consommation énergétique.

Toutefois une telle approche n'est pas satisfaisante pour plusieurs raisons.

Elle oblige à de nombreuses exécutions, dans la mesure où le nombre de fréquences possibles peut être assez élevé. Ces nombreuses exécutions représentent un coût tant en terme de temps d'exécution globale (le temps d'exécution de l'application se voit prolonger de ces exécutions de tests), qu'en terme de consommation énergétique.

Dans le cas où l'utilisateur se voit facturer l'accès à la ferme de calcul, ces nombreuses exécutions représentent en outre un coût financier.

Une autre solution décrite dans le document US2012/260057A1 consiste à déterminer une fréquence d'exécution optimisée à l'aide de compteurs matériels au sein du microprocesseur utilisé.

RESUME DE L'INVENTION

Le but de la présente invention est de fournir une solution palliant au moins partiellement les inconvénients précités.

A cette fin, la présente invention propose un procédé pour déterminer une fréquence optimale pour l'exécution d'une application logicielle sur un système de traitement de l'information, comportant

- une première exécution de ladite application à une fréquence déterminée, permettant de déterminer un temps d'exécution global $T_g$ et une consommation énergétique globale $E_g$ ;
- Une seconde exécution de ladite application à ladite fréquence déterminée, à l'aide d'un outil de mesure, permettant de déterminer des mesures $T_{MPI}^*, T_{IO}^*, T_g^*$ sur l'exécution de ladite application, lesdites mesures comprenant un temps d'exécution global avec ledit outil de mesure $T_g^*$, des mesures $T_{IO}^*$ sur les entrées-sorties de ladite application logicielle et des mesures $T_{MPI}^*$ sur les appels au système de gestion et de communication ;
- Une étape de détermination d'une première loi fournissant un temps d'exécution t(f) en fonction de la fréquence f, en fonction dudit temps d'exécution global avec ledit outil de mesure $T_g^*$, desdites mesures sur les entrées-sorties de ladite application et desdites mesures sur les appels au système de gestion et de communication, et de détermination d'une seconde loi fournissant une consommation énergétique E(f) en fonction de la fréquence f ;
- Une étape de détermination de ladite fréquence optimale comme fréquence optimisant un critère C(f) combinant ledit temps d'exécution et ladite consommation énergétique, en fonction de la fréquence, déterminés respectivement par lesdites première et deuxième lois.

Suivant des modes de réalisation préférés, l'invention comprend une ou plusieurs des caractéristiques suivantes qui peuvent être utilisées séparément ou en combinaison partielle entre elles ou en combinaison totale entre elles :

- lesdits appels sont effectués via une interface de passage de messages, MPI, et dans lequel les mesures sur lesdits appels comprennent des temps relatifs aux fonctions MPI_Init, MPI_wait, MPI_Barrier.
- ledit critère est de la forme $C(f) = w_t \cdot t(f) + w_E \cdot E(f)$, dans laquelle $w_t$ et $w_E$ sont deux poids prédéterminées.
- ladite fréquence optimale $f_o$ est déterminée en calculant les valeurs dudit critère C(f) pour plusieurs valeurs de fréquence et en recherchant la valeur minimale dudit critère parmi les valeurs calculées.
- la valeur dudit critère C(f) est calculée pour chaque valeur possible de ladite fréquence f.
- ladite première loi s'exprime sous la forme

$$t(f) = \frac{a}{f} + T_\infty$$

dans laquelle

$$T_\infty = \frac{T_g}{T_g^*} \cdot T^* \text{ et } a = f_d \cdot \left(T_g - T_\infty\right)$$

- ladite seconde loi s'exprime sous la forme

$$E(f) = p(f) \cdot t$$

dans laquelle p(f) représente la puissance dudit système de traitement de l'information en fonction de la fréquence.

- ledit système de traitement de l'information est une ferme de calcul ;
- une étape préalable consiste à lancer une application de test à chacune des valeurs de fréquence possible et de mesurer l'énergie consommée et le temps d'exécution correspondant, afin de déterminer la puissance (p(f)) pour chacune desdites fréquences.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

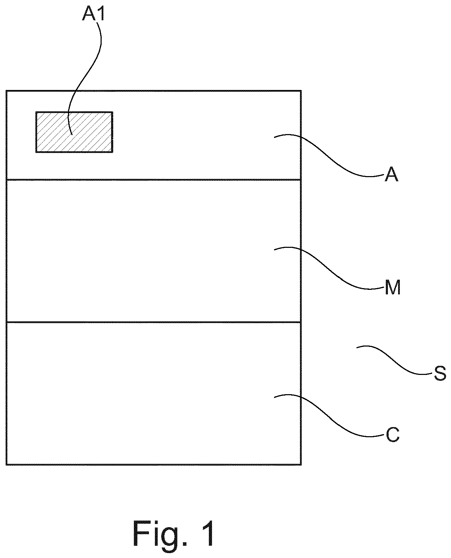

La figure 1 représente très schématiquement un système de traitement de l'information, selon un mode de réalisation de l'invention.

DESCRIPTION DETAILLEE DE L'INVENTION

La figure 1 illustre de façon très schématique et haut-niveau un système de traitement de l'information S, comportant de façon typique

- Une première couche C, matérielle, formée des microprocesseurs et autres circuits de calcul.
- Une seconde couche M, logicielle, formée d'un système d'exploitation (OS pour « Operating System » en langue anglaise) et éventuellement d'une plateforme de communication de type « middleware ».
- Une troisième couche A, également logicielle, contenant les applications A1.

Ces couches peuvent représenter une vue abstraite dans la mesure où le système de traitement de l'information peut être réparti sur une pluralité de machines de traitement. C'est notamment dans le cas d'une ferme de calcul qui interconnecte un grand nombre d'ordinateurs, localisés en un ou plusieurs sites.

La couche intermédiaire permet, entre autres fonctionnalités, de rendre l'infrastructure matérielle transparente pour les applications A1. Elle permet également d'assurer les communications entre applications et les interactions entre les applications et le monde extérieur, c'est-à-dire à gérer les entrées-sorties.

La couche intermédiaire peut comprendre un système de gestion et de communication présentant, par exemple, une interface de passage de messages, ou MPI pour « *Massage Passing Interface* » en langue anglaise. MPI est une norme basée sur le système d'exploitation Unix définissant des fonctions utilisables par les applications logicielles pour exploiter les fonctionnalités des plateformes de traitement multi-ordinateur et/ou multiprocesseurs via un mécanisme de passage de messages.

L'invention vise à déterminer une fréquence optimale $f_o$ comme fréquence optimisant un critère C(f) combinant le temps d'exécution et la consommation énergétique, en fonction de la fréquence d'exécution de l'application A1. Selon l'invention, cette fréquence optimale est déterminée spécifiquement pour l'application A1 : en fonction des caractéristiques et du comportement spécifique de chaque application, une fréquence optimale $f_o$ différente peut être déterminée.

Selon l'invention, afin de déterminer cette fréquence optimale $f_o$, on exécute deux fois l'application logicielle A1. Chacune de ces exécutions permet de déterminer un sous-ensemble de paramètres, dans la mise en commun permet dans une étape ultérieur de déterminer cette fréquence optimale $f_o$.

- Une première exécution est effectuée à une fréquence déterminée $f_d$. Elle permet de déterminer un temps d'exécution global $T_g$ et une consommation énergétique globale $E_g$.
- Une seconde exécution est effectuée à la même fréquence déterminée $f_d$, mais cette fois-ci à l'aide d'un outil de mesure, permettant de déterminer des mesures $T_{MPI}^*$, $T_{IO}^*$, $T_g^*$ sur l'exécution de l'application.

L'ordre dans lequel a lieu les deux exécutions est indifférent. En outre, il n'est pas important que les deux exécutions s'enchaînent : elles peuvent avoir lieu à des moments différents, notamment en fonction de l'ordonnancement imposé par la charge du système de traitement de l'information. La valeur de la fréquence $f_d$ est elle-aussi sans importance, mais elle doit être la même pour les deux exécutions.

Le temps d'exécution global $T_g$ et la consommation électrique $E_g$ peuvent être déterminés à l'aide d'outils d'ordonnancement de tâches dit « batch scheduler » ou « job scheduler ».

Ces outils permettent entre autres fonctionnalités d'enchaîner des lancements d'applications et, pour certains, d'enregistrer dans un journal (ou « log » en anglais), des informations sur ces lancements, notamment les dates, les erreurs éventuelles, etc. Un exemple d'un tel outil peut être SLURM (pour « Simple Linux Utility Resource Management »).

Le temps d'exécution global $T_g$ est déterminé facilement en comparant la date de début d'exécution de l'application logicielle A1 et la date de fin d'exécution. Ces dates peuvent s'obtenir aisément à partir du journal de l'outil d'ordonnancement.

De la même façon, la consommation énergétique $E_g$ peut être déterminée par un outil par consultation du journal. La consommation énergétique est typiquement exprimée en joules et représente l'énergie consommée par les ressources matérielles utilisées pour l'exécution de l'application logicielle A1.

Différents mécanismes peuvent être mis en œuvre par les outils d'ordonnancement pour déterminer cette consommation énergétique $E_g$. Par exemple :

- Une première mise en œuvre consiste à utiliser des compteurs matériels accessibles en lecture et placés au sein des microprocesseurs eux-mêmes. Ces compteurs peuvent être de type RAPL (pour « Running Average Power Limit »), un mécanisme disponible sur les microprocesseurs du fabriquant Intel.

- Une seconde mise en œuvre consiste à faire usage de sondes observées par un contrôleur d'administration distante sur la carte mère et accessibles via le protocole IPMI (pour « *Intelligent Platform Management Interface* » en langue anglaise).

Cette interface IPMI permet la gestion d'un système de traitement de l'information en utilisant une interface réseau et sans passer par le système d'exploitation.

L'outil de mesure utilisé pour la seconde exécution peut être un outil de profilage de code.

Le profilage de code (ou « *code profiling* » en anglais) consiste à analyser l'exécution d'un logiciel afin de connaitre son comportement à l'exécution.

Le profilage de code permet de contrôler lors de l'exécution d'un logiciel :

- la liste des fonctions appelées et le temps passé dans chacune d'elles ;
- l'utilisation processeur ;
- l'utilisation mémoire.

Le profilage du code est implémenté par instrumentation du code source en rajoutant des instructions au code source originel qui permettent de mesurer le comportement du logiciel lors de l'exécution. Ensuite, un scénario d'utilisation est défini et exécuté sur le logiciel instrumenté. Les données de profilage sont récoltées et analysées à la fin de l'exécution.

A titre d'exemples d'outils de profilage, on peut citer l'outil BullxProf de la société Bull, l'outil Allinea Map, de la société Allinea, Gprof, qui est un outil sous licence GNU, etc.

Grâce à cette seconde exécution, on peut déterminer des mesures $T_{MPI}^*$, $T_{IO}^*$, $T_g^*$ sur l'exécution de l'application logicielle, et plus spécifiquement

- Un temps d'exécution global à l'aide de l'outil logiciel $T_g^*$. Du fait de l'utilisation de cet outil qui intervient dans le comportement de l'application logicielle, ce temps $T_g^*$ est nécessairement plus long que le temps d'exécution global $T_g$ sans outil.

- Un temps $T_{IO}^*$ correspondant aux entrées-sorties de l'application logicielle. Chaque entrée-sortie (c'est-à-dire, accès à une périphérique externe, à la mémoire de masse, etc.) coûte un lapse de temps. Le temps mesuré $T_{IO}^*$ correspond au cumul de ces lapses de temps sur toute la durée de l'exécution de l'application logicielle

- Un temps $T_{MPI}^*$ sur les appels au système de gestion et de communication, notamment via une interface MPI. Il s'agit là aussi d'une mesure correspondant au cumul de différents lapses de temps passé en communication tout au long de l'exécution de l'application logicielle.

Selon un mode de réalisation de l'invention, une sélection est effectuée parmi les différentes fonctions de l'interface MPI. Des séries d'expériences ont été entreprises afin de déterminer le sous-ensemble de fonctions donnant les résultats optimaux.

Selon ce mode de réalisation, les fonctions prises en compte pour la mesure du temps $T_{MPI}^*$ sont les fonctions MPI_Init, MPI_wait et MPI_Barrier.

La fonction MPI_Init initialise l'environnement d'exécution de l'interface MPI.

La fonction MPI_Wait attend qu'une requête à l'interface MPI soit terminée.

La fonction MPI_Barrier bloque l'exécution jusqu'à ce que tous les processus aient atteint ce point.

Le temps $T^*_{MPI}$ passé pour l'exécution de ces trois fonctions forme une bonne estimation du temps passé pour les appels au système de gestion et de communication.

Le procédé selon l'invention peut ensuite mettre en œuvre une étape de détermination

- d'une première loi fournissant un temps d'exécution t(f) de l'application en fonction de la fréquence f,
- et d'une seconde loi fournissant une consommation énergétique E(f) en fonction de la fréquence (f).

Selon une mise en œuvre de l'invention, cette première loi peut s'exprimer sous la forme

$$t(f) = \frac{a}{f} + T_\infty$$

dans laquelle $T_\infty = \frac{T_g}{T^*_g} \cdot T^*$ et $a = f_d \cdot (T_g - T_\infty)$

T* peut représenter le cumul entre le temps $T^*_{IO}$ lié aux entrées-sorties et le temps $T^*_{MPI}$ lié aux appels au système de gestion et communication :

$$\mathrm{T}^* = T^*_{IO} + T^*_{MPI}$$

$T_\infty$ représente un temps « incompressible » de l'application logicielle, c'est-à-dire le temps d'exécution théorique avec une fréquence infinie. Il s'agit d'un paramètre propre au comportement de l'application logicielle, de même que le paramètre « a ».

Afin de déterminer complétement cette loi, les deux paramètres « a » et $T_\infty$ doivent donc être déterminées. Ces déterminations peuvent être faites par les expressions $T_\infty = \frac{T_g}{T^*_g} \cdot T^*$ et $a = f_d \cdot (T_g - T_\infty)$ puisque toutes les quantités $T_g$, $T^*_g$, $T^*$ et $f_d$ sont connues à ce stade.

La première relation $T_\infty = \frac{T_g}{T^*_g} \cdot T^*$ suppose que la proportion du temps T* liés aux entrées sorties et aux communications par rapport au temps d'exécution total est la même avec et sans l'outil de profilage : on peut donc estimer ce paramètre $T_\infty$ à partir de ce temps cumulé T*.

Une fois ce paramètre $T_\infty$ connu, le second paramètre, « a », peut être déduit facilement par l'expression $a = f_d \cdot (T_g - T_\infty)$.

Selon l'invention, on détermine également une seconde loi fournissant l'énergie consommée E(f) en fonction de la fréquence f. Selon un mode de réalisation de l'invention, cette seconde loi peut s'exprimer sous la forme :

$$E(f) = p(f) \cdot t$$

dans laquelle p(f) représente la puissance du système de traitement de l'information en fonction de la fréquence.

La puissance P(f) peut être préalablement déterminée pour différentes valeurs de la fréquence

Par exemple, dans la mesure où le nombre de fréquences possibles peut être limité, par exemple 8 valeurs différentes, une étape préalable peut être de lancer l'exécution d'une application de test à chacune de ces valeurs de fréquence, et de mesurer l'énergie consommée E(f) et le temps d'exécution. Il est alors aisé de déduire la puissance p(f) pour chacune de ces fréquences.

Il est également possible, notamment si le nombre de valeurs possibles est plus important, de n'effectuer cette exécution et ces mesures que sur un nombre limité de valeurs, et d'effectuer une interpolation pour les valeurs intermédiaires.

L'application de test doit idéalement être une application logicielle effectuant peu d'entrées-sorties et d'appels au système de gestion et de communication, mais effectuant beaucoup d'appels au microprocesseur. Une telle application de test peut par exemple être le test de performances « Linpack ». Ce test sert notamment à classer les plus puissants superordinateurs du monde dans le TOP500. Créé par Jack Dongarra, il mesure le temps mis par un ordinateur pour résoudre un système de n équations à n inconnues dense, la solution étant obtenue par une utilisation partielle du pivot de Gauss, par $2/3 \cdot n^3 + n^2$ opérations à virgule flottantes. La performance est ensuite calculée en divisant le nombre d'opérations par le temps mis, donc en FLOPS.

Connaissant la puissance du système de traitement de l'information p(f) pour l'ensemble des valeurs de la fréquence f, il est alors possible de déterminer la seconde loi pour déterminer l'énergie consommée E(f) par l'application logicielle en fonction de la fréquence f.

L'invention comprend ensuite une étape de détermination de la fréquence optimale $f_o$ comme fréquence optimisant un critère C(f) combinant le temps d'exécution et la consommation énergétique, en fonction de la fréquence. Ces temps d'exécution et consommation énergétique sont bien évidemment déterminés par les premières et secondes lois respectivement.

Selon un mode de réalisation de l'invention, ce critère est de la forme :

$$C(f) = w_t \cdot t(f) + w_E \cdot E(f),$$

dans laquelle $w_t$ et $w_E$ sont deux poids prédéterminées. Le choix de ces deux poids peut être fourni par l'utilisateur de l'application logicielle en fonction de ce qu'il souhaite privilégier et aussi en fonction de la politique de tarification de l'opérateur du système de traitement de l'information.

Si le nombre de valeurs de fréquence possibles n'est pas trop élevé, il est possible de calculer la valeur du critère C(f) pour chacune des valeurs de la fréquence f, et de rechercher la valeur minimale de ce critère C(f) parmi ces valeurs. La fréquence optimale $f_o$ est la fréquence correspondant à cette valeur minimale du critère C(f).

Bien entendu, la présente invention n'est pas limitée aux exemples et au mode de réalisation décrits et représentés, mais elle est susceptible de nombreuses variantes accessibles à l'homme de l'art.

**Revendications**

1. Procédé pour déterminer une fréquence optimale ($f_o$) pour l'exécution d'une application logicielle sur un système de traitement de l'information, comportant

   - Une première exécution de ladite application à une fréquence de microprocesseur déterminée ($f_d$), permettant de déterminer un temps d'exécution global ($T_g$) et une consommation énergétique globale ($E_g$) ;
   - Une seconde exécution de ladite application à ladite fréquence déterminée ($f_d$), à l'aide d'un outil de profilage par instrumentation du code de ladite application, permettant de déterminer des mesures $(T^*_{MPI}, T^*_{IO}, T^*_g)$ sur l'exécution de ladite application, lesdites mesures comprenant un temps d'exécution global avec ledit outil de mesure $(T^*_g)$, des mesures $(T^*_{IO})$ sur les entrées-sorties de ladite application logicielle et des mesures $(T^*_{MPI})$ sur les appels au système de gestion et de communication ;

   - Une étape de détermination d'une première loi fournissant un temps d'exécution (t(f)) en fonction de la fréquence (f), en fonction dudit temps d'exécution global avec ledit outil de mesure

$(T^*_g)$, desdites mesures sur les entrées-sorties de ladite application et desdites mesures sur les appels au système de gestion et de communication, et de détermination d'une seconde loi fournissant une consommation énergétique (E(f)) en fonction de la fréquence (f), ladite première loi s'exprimant sous la forme

$$t(f) = \frac{a}{f} + T_\infty$$

$$T_\infty = \frac{T_g}{T^*_g} \cdot T^*$$

dans laquelle et $a = f_d \cdot (T_g - T_\infty)$

et $T^* = T^*_{IO} + T^*_{MPI}$

   - Une étape de détermination de ladite fréquence optimale ($f_o$) comme fréquence optimisant un critère (C(f)) combinant ledit temps d'exécution et ladite consommation énergétique, en fonction de la fréquence, déterminés respectivement par lesdites première et deuxième lois.

2. Procédé selon la revendication précédente, dans lequel lesdits appels sont effectués via une interface de passage de messages, MPI, et dans lequel les mesures sur lesdits appels comprennent des temps relatifs aux fonctions MPI_Init, MPI_wait, MPI_Barrier.

3. Procédé selon l'une des revendications précédentes, dans lequel ledit critère est de la forme $C(f) = w_t \cdot t(f) + w_E \cdot E(f)$, dans laquelle $w_t$ et $w_E$ sont deux poids prédéterminées.

4. Procédé selon la revendication précédente, dans lequel ladite fréquence optimale ($f_o$) est déterminée en calculant les valeurs dudit critère (C(f)) pour plusieurs valeurs de fréquence et en recherchant la valeur minimale dudit critère parmi les valeurs calculées.

5. Procédé selon la revendication précédente, dans lequel la valeur dudit critère C(f) est calculée pour chaque valeur possible de ladite fréquence (f).

6. Procédé selon l'une des revendications précédentes dans lequel ladite seconde loi s'exprime sous la forme

$$E(f) = p(f) \cdot t$$

dans laquelle p(f) représente la puissance dudit système de traitement de l'information en fonction de la fréquence, et t est le temps d'exécution.

7. Procédé selon la revendication précédente, dans lequel une étape préalable consiste à lancer une application de test à chacune des valeurs de fréquence possible et de mesurer l'énergie consommée et le temps d'exécution correspondant, afin de déterminer la puissance (p(f)) pour chacune desdites fréquences.

8. Procédé selon l'une des revendications précédentes, dans lequel ledit système de traitement de l'information est une ferme de calcul.

9. Programme d'ordinateur comportant des moyens logiciels adaptés à la mise en œuvre du procédé selon l'une des revendications précédentes lorsque que déclenché par une plateforme de traitement de l'information.

**Patentansprüche**

1. Verfahren, um eine optimale Frequenz ($f_o$) für das Ausführen einer Softwareanwendung auf einem Informationsverarbeitungssystem zu bestimmen, umfassend

- ein erstes Ausführen der Anwendung bei einer bestimmten Mikroprozessor-Frequenz ($f_d$), das es ermöglicht, eine allgemeine Ausführungszeit ($T_g$) und einen allgemeinen Energieverbrauch ($E_g$) zu bestimmen;
- ein zweites Ausführen der Anwendung bei der bestimmten Frequenz ($f_d$) mithilfe eines Tools zum Profilieren durch Instrumentieren des Codes der Anwendung, das es ermöglicht, Messungen ($T^*_{MPI}$, $T^*_{IO}$, $T^*_g$) an der Ausführung der Anwendung zu bestimmen, wobei die Messungen eine allgemeine Ausführungszeit mit dem Messtool ($T^*_g$), Messungen ($T^*_{IO}$) an den Eingängen/Ausgängen der Softwareanwendung, und Messungen ($T^*_{MPI}$) an den Aufrufen des Verwaltungs- und Kommunikationssystems umfassen;
- einen Schritt zum Bestimmen eines ersten Gesetzes, das eine Ausführungszeit (t(f)) in Abhängigkeit von der Frequenz (f), in Abhängigkeit von der allgemeinen Ausführungszeit mit dem Messtool ($T^*_g$), von den Messungen an den Eingängen/Ausgängen der Anwendung und von den Messungen an den Aufrufen des Verwaltungs- und Kommunikationssystems liefert, und zum Bestimmen eines zweiten Gesetzes, das einen Energieverbrauch (E (f)) in Abhängigkeit von der Frequenz (f) liefert, wobei das erste Gesetz in der Form

$$t(f) = \frac{a}{f} + T_\infty$$

ausgedrückt wird,

$$T_\infty = \frac{T_g}{T^*_g} \cdot T^*$$

wobei und $a = f_d \cdot (T_g - T_\infty)$ und

$$T^* = T^*_{IO} + T^*_{MPI}$$
,

- einen Schritt zum Bestimmen der optimalen Frequenz ($f_o$) als Frequenz, die ein Kriterium (C(f)) optimiert, das die Ausführungszeit und den Energieverbrauch in Abhängigkeit von der Frequenz, die jeweils über das erste und zweite Gesetz bestimmt wurden, kombiniert.

2. Verfahren nach dem vorstehenden Anspruch, wobei die Aufrufe über eine Message Passing Interface, MPI, vorgenommen werden, und wobei die Messungen an den Aufrufen Zeiten umfassen, die sich auf die Funktionen MPI_Init, MPI_wait, MPI_Barrier beziehen.

3. Verfahren nach einem der vorstehenden Ansprüche, wobei das Kriterium der Form $C(f) = w_t \cdot t(f) + w_E \cdot E(f)$ entspricht, wobei $w_t$ und $w_E$ zwei vorbestimmte Gewichtungen sind.

4. Verfahren nach dem vorstehenden Anspruch, wobei die optimale Frequenz ($f_o$) unter Berechnen der Werte des Kriteriums (C(f)) für mehrere Frequenzwerte, und unter Suchen des Minimalwerts des Kriteriums unter den berechneten Werten bestimmt wird.

5. Verfahren nach dem vorstehenden Anspruch, wobei der Wert des Kriteriums C(f) für jeden möglichen Wert der Frequenz (f) berechnet wird.

6. Verfahren nach einem der vorstehenden Ansprüche, wobei das zweite Gesetz in der Form

$$E(f) = p(f) \cdot t$$

ausgedrückt wird,
wobei p(f) die Leistung des Informationsverarbeitungssystems in Abhängigkeit von der Frequenz darstellt, und t die Ausführungszeit ist.

7. Verfahren nach dem vorstehenden Anspruch, wobei ein vorausgehender Schritt darin besteht, eine Testanwendung bei jedem der möglichen Frequenzwerte zu starten und die verbrauchte Energie und die entsprechende Ausführungszeit zu messen, um die Leistung (p(f)) für jede der Frequenzen zu bestimmen.

8. Verfahren nach einem der vorstehenden Ansprüche, wobei das Informationsverarbeitungssystem eine Rechenfarm ist.

9. Computerprogramm, das Softwaremittel umfasst, die für die Umsetzung des Verfahrens nach einem der vorstehenden Ansprüche geeignet sind, wenn es von einer Informationsverarbeitungsplattform ausgelöst wird.

**Claims**

1. Method for determining an optimal frequency ($f_o$) for the execution of a software application on an information-processing system, comprising

   - A first execution of said application at a determined microprocessor frequency ($f_d$), allowing to determine an overall execution time ($T_g$) and an overall energy consumption ($E_g$);
   - A second execution of said application at said determined frequency ($f_d$), using a tool for profiling by instrumentation of the code of said application, allowing to determine measurements ($T^*_{MPI}$, $T^*_{IO}$, $T^*_g$) on the execution of said application, said measurements comprising an overall execution time with said measurement tool ($T^*_g$), measurements ($T^*_{IO}$) on the inputs-outputs of said software application and measurements ($T^*_{MPI}$) on the calls to the management and communication system;
   - A step of determining a first law providing an execution time ($t(f)$) based on the frequency ($f$), based on said overall execution time with said measurement tool ($T^*_g$), said measurements on the inputs-outputs of said application and said measurements on the calls to the management and communication system, and of determining a second law providing an energy consumption ($E(f)$) based on the frequency ($f$), said first law being expressed in the form

$$t(f) = \frac{a}{f} + T_\infty$$

$$T_\infty = \frac{T_g}{T^*_g} \cdot T^*$$

Wherein                    and $a = f_d \cdot (T_g - T_\infty)$

and $\mathrm{T}^* = T^*_{IO} + T^*_{MPI}$

   - A step of determining said optimal frequency ($f_o$) as the frequency optimising a criterion ($C(f)$) combining said execution time and said energy consumption, based on the frequency, determined respectively by said first and second laws.

2. Method according to the previous claim, wherein said calls are carried out via a message passing interface, MPI, and wherein the measurements on said calls comprise times relative to the functions MPI_Init, MPI_wait, MPI_Barrier.

3. Method according to one of the previous claims, wherein said criterion is in the form $C(f) = w_t \cdot t(f) + w_E \cdot E(f)$, wherein $w_t$ and $w_E$ are two predetermined weights.

4. Method according to the previous claim, wherein said optimal frequency ($f_o$) is determined by calculating the values of said criterion ($C(f)$) for a plurality of frequency values and by seeking the minimum value of said criterion among the calculated values.

5. Method according to the previous claim, wherein the value of said criterion $C(f)$ is calculated for each possible value of said frequency ($f$).

6. Method according to one of the previous claims, wherein said second law is expressed in the form

$$E(f) = p(f) \cdot t$$

wherein $p(f)$ represents the power of said information-processing system based on the frequency, and $t$ is the execution time.

7. Method according to the previous claim, wherein a previous step involves launching a test application at each of the possible-frequency values and measuring the energy consumed and the corresponding execution time, in order to determine the power ($p(f)$) for each of said frequencies.

8. Method according to one of the previous claims, wherein said information-processing system is a computing farm.

9. Computer program comprising software means adapted to the implementation of the method according to one of the previous claims when triggered by an information-processing platform.

Fig. 1

**EP 3 009 934 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012260057 A1